# EUROPÄISCHE PATENTSCHRIFT

(11) **EP 1 735 553 B1**
(45) Veröffentlichungstag und Bekanntmachung des Hinweises auf die Patenterteilung: **06.06.2012**
(21) Anmeldenummer: 04786986.2
(22) Anmeldetag: 22.09.2004
(51) Int. Cl.: F16J 15/08

(54) **METALLISCHE ZYLINDERKOPFDICHTUNG OHNE DISTANZLAGE**
METAL CYLINDER HEAD GASKET WITHOUT A SPACING LAYER
JOINT DE CULASSE METALLIQUE SANS COUCHE DE SEPARATION

(30) Priorität: 16.12.2003 DE 10358919
(43) Veröffentlichungstag der Anmeldung: 27.12.2006
(60) Teilanmeldung: 09176872.1
(73) Patentinhaber: Federal-Mogul Sealing Systems GmbH, 57562 Herdorf (DE)
(72) Erfinder: SCHMITT, Klaus, 57520 Grünebach (DE); FLEMMING, Ralf, 57520 Langenbach (DE)
(74) Vertreter: Becker Kurig Straus
(86) Internationale Anmeldenummer: PCT/EP2004/010628
(87) Internationale Veröffentlichungsnummer: WO 2005/061931

(56) Entgegenhaltungen:
- EP-A- 1 180 621
- DE-A- 10 029 352
- JP-A- 2002 005 292
- US-A- 4 759 585

## Beschreibung

Die vorliegende Erfindung betrifft eine metallische Zylinderkopfdichtung ohne Distanzlage. Insbesondere betrifft sie eine Zylinderkopfdichtung mit nur einer Funktionslage.

Eine Zylinderkopfdichtung stellt bei einem Verbrennungsmotor die Gasdichtigkeit zwischen Zylinderblock und Zylinderkopf sicher. Dabei muss die Zylinderkopfdichtung auftretende Schwingungen zwischen Zylinderkopf und Zylinderblock elastisch ausgleichen.

Das Funktionsprinzip von metallischen Flachdichtungen zur Verwendung als Zylinderkopfdichtung von Verbrennungsmotoren beruht darauf, dass eine elastische Dichtungszone vorhanden ist. Die Dichtung wird mit Sicken ausgebildet, die um den Bereich der Brennräume elastische Dichtungszonen bilden. Die Pressung der Sicken ändert sich im Betrieb des Motors aufgrund der verschiedenen Belastung ständig. Die Stärke der Materiallage sowie die jeweilige Formgebung der Sicken hat Einfluss auf die elastischen Eigenschaften der Sicken d.h. die Federkraft oder -steifigkeit. Die entsprechende Federkennlinie kann nur über enge Bereiche variiert werden. Der den Brennräumen direkt benachbarte Bereich einer solchen Flachdichtung ist während des Betriebs der Motors höheren Belastungen ausgesetzt als der Rest der Dichtungsfläche. Zur Sicherstellung einer genügenden Abdichtung in diesen exponierten Bereichen ist es erforderlich, hier eine hohe Flächenpressung aufzubringen. Dies wird für gewöhnlich durch eine Erhöhung der Materialstärke am Rande der Brennräume erreicht, und kann durch Umfalten einer Metalllage erfolgen oder durch die Verwendung zusätzlicher Auflagen, die mit einer Metalllage der Dichtung verbunden werden. Häufig wird diese Materialverdickung so angeordnet, dass die Sicken im eingebauten Zustand davor geschützt sind, durch den Druck vollständig abgeflacht zu werden.

Zylinderkopfdichtungen bestehen herkömmlicherweise aus mehreren Metalllagen und einer auch als Stopper bezeichneten Ringauflage. Zur Erhöhung der Pressung in den stark beanspruchten Bereichen um die Brennräume herum sind Sicken vorgesehen, die die Materialdicke erhöhen.

Die DE 101 01 604 A1 beschreibt eine Zylinderkopfdichtung mit zwei Dichtungslagen, einer Distanzlage und einer Ringauflage. Bei dieser Dichtung sind auf der dem Brennraum abgewandten Seite der Hauptsicken in den Dichtungslagen zusätzliche Abstützungssicken vorgesehen.

Die DE 100 29 352 A1 offenbart eine Flachdichtung, bei der ein Metallring über eine Schweißsicke mit einer Metalllage verschweißt ist, so dass Metallring und Metalllage in einem festen Abstand a gehalten werden. Während diese Dichtung durch die Verschweißung eine gute Gasdichtigkeit besitzt, ist die Elastizität aufgrund der festen Verbindung und des festen Abstands reduziert.

Die DE 197 51 293 A1 beschreibt eine Flachdichtung, bei der der umgelegte Falz eine Pressungsbegrenzung für die Sicke darstellt. Er bildet dabei einen Bereich mit hoher Pressung. Hier liegt die Sicke aber im Kraftnebenschluss, so dass die maximale Pressung nicht im Bereich der Sicke, sondern im Bereich der Umfaltung auftritt. Bei Dieselmotoren hat sich dieses Dichtungsprinzip bewährt.

Bei Benzinmotoren von PKWs wird in der Regel eine abweichende Konstruktion verwendet, wobei auf eine Begrenzung der Pressung verzichtet wird. Die Brennräume werden hier nur von Sicken der Zylinderkopfdichtung umschlossen, die im eingebauten Zustand abgeflacht sind. Die Sicken liegen hier also im Krafthauptschluss und nehmen daher die maximale Pressung auf.

An dieser Stelle erfolgt bei Belastung, das heisst bei Druckbeaufschlagung durch den Verbrennungsvorgang im Brennraum, ein Abrollen mit großer Schwingungsamplitude. Bei einer herkömmlichen Dichtung kommt es daher zu starken vertikalen Schwingungen. Um dennoch eine ausreichende Gasdichtigkeit zu gewährleisten, wird eine hohe Pressung an der Sicke erzeugt. Wenn die im Krafthauptschluss liegende Sicke nicht zusätzlich abgestützt ist, und somit die gesamte Belastung erfährt, wird die Lebensdauer der Dichtung dadurch negativ beeinflusst.

In EP 0574166 B1 wird eine Kombination beider Konstruktionsformen offengelegt. Es wird eine Flachdichtung beschrieben, die eine Ringauflage umfasst, welche im eingebauten Zustand bis zu der Vollsicke der Dichtungslage reicht. Durch diese Anordnung liegt die Sicke im Krafthauptschluss. Diese Anordnung ist insbesondere für Motoren geeignet, bei denen die Stegbreiten zwischen einzelnen Brennräumen gering sind, und es wird eine Konzentration der maximalen Pressung auf den Randbereich um die Brennräume ermöglicht.

Diese Ringauflage folgt aber in ihrer Form dem Profil der Sicke, und reicht nicht über die Spitze der Sicke hinaus. Dadurch wird die Federkennlinie der Sicke insofern beeinflusst, dass die Sicke härter wird, also an Elastizität verliert. Im eingebauten Zustand herrscht im Bereich der Spitze der Sicke ausserdem eine extreme Pressungsspitze. Im Vergleich mit einer Biegebalkenkonstruktion stellt die Ringauflage also sozusagen den Auflagepunkt dar. Bei Druckbeaufschlagung kommt es als Ergebnis davon zu einem Abrolleffekt über die Sickenspitze, was zu hohen Schwingungsamplituden in vertikaler Richtung führt. Je nach Druck im Brennraum kann sich dieser Effekt noch verstärken.

Die EP 1 180 621 A betrifft eine Zylinderkopfdichtung für eine Verbrennungskraftmaschine, die au seiner ersten Metallplatte und einer zweiten Metallplatte gebildet ist. Die erste und die zweite Metallplatte weisen erste bzw. zweite Sicken auf, die seitlich voneinander beabstandet und einander zugewandt sind.

Die US 4,759,585 A betrifft eine Stahllaminatdichtung für eine Brennkraftmaschine. Die Dichtung umfasst eine erste Platte mit einer ersten Sicke und eine zweite Platte mit einer zweiten Sicke. Die Sicken sind im eingebauten Zustand einander zugewandt und liegen seitlich aneinander an.

Eine Ringauflage, auch als Stopper bezeichnet, dient dazu, im Bereich der Sicke die Materialdicke zu vergrößern und dadurch die Pressung an den am meisten belasteten Stellen der Dichtung zu erhöhen.

Je mehr Lagen verwendet werden, desto aufwendiger und somit teurer wird die Herstellung einer entsprechenden Zylinderkopfdichtung. Die Anpassung unterschiedlicher Lagen aneinander, und die eventuell unterschiedlichen temperaturabhängigen Ausdehnungen bedeuten eine potenzielle Verschlechterung von Dichteigenschaften und Lebensdauer der entsprechenden Dichtung.

Daher ist es Aufgabe der vorliegenden Erfindung, eine Zylinderkopfdichtung bereitzustellen, bei der der Abrolleffekt verringert ist. Eine weitere Aufgabe ist es, eine Zylinderkopfdichtung bereitzustellen, die nur eine Funktionslage aufweist.

Gemäß einem ersten Aspekt der vorliegenden Erfindung wird eine metallische Zylinderkopfdichtung mit mindestens einer Öffnung entsprechend einem Brennraum eines Verbrennungsmotors bereitgestellt. Die Dichtung umfasst eine Funktionslage und eine Ringauflage, wobei die Ringauflage um den Durchbruch herum angeordnet ist. Die Funktionslage weist eine Vollsicke auf. Die Ringauflage weist eine Vollsicke auf, in welcher die Vollsicke der Funktionslage aufliegt, sowie eine Sicke, die von dem Durchbruch für den Brennraum aus gesehen in radialer Richtung hinter der Vollsicke angeordnet ist. Diese zusätzliche Sicke nimmt einen Teil der Pressung auf, die im eingebauten Zustand der Zylinderkopfdichtung auftritt.

Es wird bevorzugt, dass die Sicke als eine Halbsicke ausgeführt ist. Dies kann gewünscht sein, um eine bestimmte Oberfläche in Kontakt mit der Sicke zu bringen. Ausserdem kann die Elastizität der Sicke durch die Ausbildung als Halbsicke, verglichen mit einer Vollsicke, angepasst werden.

Gemäß einer Ausführungsform grenzt die Ringauflage auf der dem Brennraum abgewandten Seite der Halbsicke an die Funktionslage an.

Es wird bevorzugt, dass die Sicke als eine Vollsicke ausgeführt ist. Dadurch kann eine bestimmte Oberfläche mit der Sicke in Kontakt gebracht werden. Ausserdem kann die Elastizität der Sicke durch die Ausbildung als Vollsicke, verglichen mit einer Halbsicke, angepasst werden.

Es wird bevorzugt, dass sich die Ringauflage mindestens von einem Sickenfuß bis zum anderen Sickenfuß der Vollsicke erstreckt. Dadurch liegt die Vollsicke im Krafthauptschluss.

Gemäß einer Ausführungsform liegt die Ringauflage auf der vom Brennraum abgewandten Seite der Vollsicke auf einem niedrigeren Niveau als auf der dem Brennraum zugewandten Seite der Vollsicke.

Gemäß einer Ausführungsform liegt die Ringauflage auf der vom Brennraum abgewandten Seite der Vollsicke auf einem höheren Niveau als auf der dem Brennraum zugewandten Seite der Vollsicke.

Gemäß einer Ausführungsform hat die Ringauflage auf der vom Brennraum abgewandten Seite der Vollsicke einen Abstand a von der Funktionslage.

Gemäß einer Ausführungsform grenzt die Ringauflage auf der vom Brennraum abgewandten Seite der Vollsicke an die Funktionslage an.

Gemäß einer Ausführungsform ist die Spitze der Vollsicke nach oben gerichtet ist.

### Kurze Beschreibung der Zeichnung

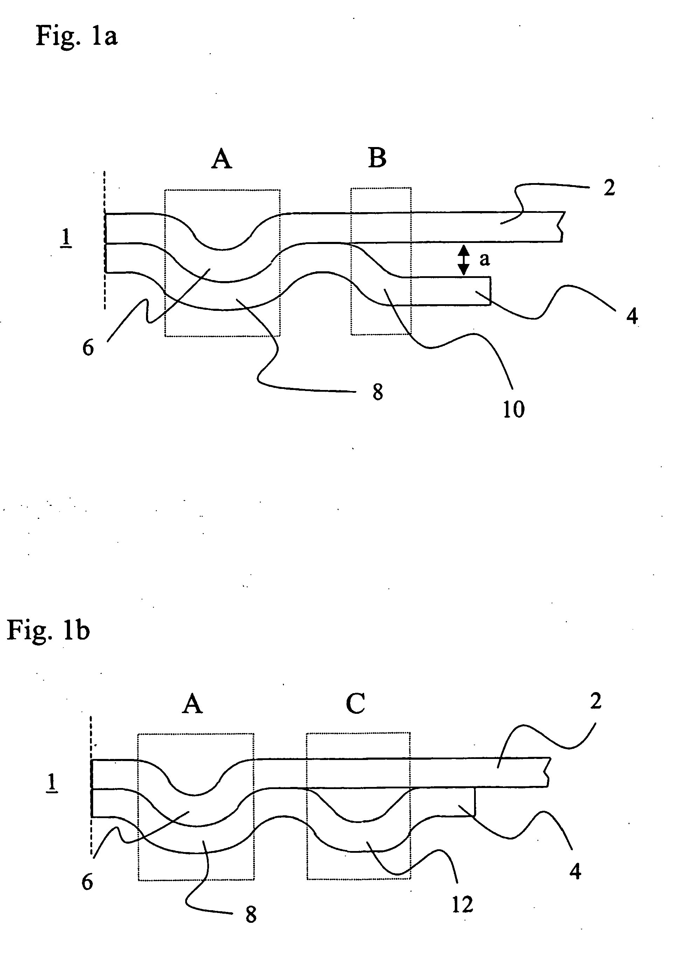

FIGN. 1a und 1b stellen zwei bevorzugte Ausführungsformen der erfindungsgemäßen Zylinderkopfdichtung mit einer Funktionslage in einer Querschnittsansicht dar.

Auf der linken Seite jeder Figur befindet sich der dem Brennraum benachbarte Bereich der Zylinderkopfdichtung, während sich auf der rechten Seite jeder Figur die dem Brennraum abgewandte Seite davon befindet.

Die Sicke liegt dabei auf der Ringauflage bzw. dem Stopper auf. Dieses Prinzip wird daher auch als "Sicke auf Stopper" bezeichnet.

In Fig. 1a ist eine Zylinderkopfdichtung gezeigt, die eine Funktionslage 2 und eine Ringeinlage 4 umfasst. Die Funktionslage 2 weist eine Vollsicke 6 auf. Die Ringeinlage 4 weist eine Vollsicke 8 auf, in der die Vollsicke 6 aufliegt, und eine vom Brennraum aus gesehen in radialer Richtung dahinter liegende Halbsicke 10. In dem mit A bezeichneten Bereich, in dem die Vollsicke 6 der Funktionslage 2 auf der Ringeinlage 4 aufliegt, tritt im eingebauten Zustand die größte Pressung auf. Ein Teil des auftretenden Drucks wird im mit B bezeichneten Bereich durch die Halbsicke 10 der Ringeinlage 4 aufgenommen, wodurch die Vollsicke 6 entlastet wird. Dadurch wird also eine zusätzliche Abstützung erzeugt. Die Vollsicke 6 der Funktionslage liegt auf der Ringauflage auf und liegt somit im Krafthauptschluss. Der Auflagepunkt der Vollsicke 6 ist also sozusagen der Auflagepunkt einer Biegebalkenkonstruktion.

In Fig. 1b ist eine Modifikation der Zylinderkopfdichtung von Fig. 1a dargestellt. Statt der Halbsicke 10 ist hier jedoch eine weitere Vollsicke 12 ausgebildet. Im Vergleich zu der in Figur 1a gezeigten Situation wird hier ein Teil des Drucks im Bereich C von der zusätzlichen Sicke aufgenommen. Die Ausgestaltung der zusätzlichen Sicke als Vollsicke 12 wie hier gezeigt oder als Halbsicke 10 wie in Fig. 1a ermöglicht eine Einstellung der elastischen Eigenschaften der erfindungsgemäßen Zylinderkopfdichtung im Bereich der zusätzlichen Sicke. Dadurch kann ebenfalls beeinflusst werden, auf welcher Oberfläche die Ringauflage hinter diesem Bereich direkt aufliegt. Das sind hier entweder die Funktionslage oder wie in Fig. 1a die Oberseite des Zylinderblocks (nicht gezeigt).

## Patentansprüche

1. Metallische Zylinderkopfdichtung mit mindestens einer Öffnung entsprechend einem Brennraum (1) eines Verbrennungsmotors, umfassend eine Funktionslage (2) und eine darunter liegende Ringauflage (4), wobei die Funktionslage eine Vollsicke (6) aufweist, **dadurch gekennzeichnet, dass** die Ringauflage (4) eine Vollsicke (8) aufweist, in der die Vollsicke (6) der Funktionslage (2) aufliegt, und dass die Ringauflage (4) eine Sicke (10, 12) aufweist, die auf der vom Brennraum (1) abgewandten Seite der Vollsicke (8) der Ringauflage (4) angeordnet ist.

2. Zylinderkopfdichtung gemäß Anspruch 1, wobei die Sicke (10) als Halbsicke ausgeführt ist.

3. Zylinderkopfdichtung gemäß Anspruch 2, wobei die Ringauflage (4) auf der dem Brennraum (1) abgewandten Seite der Halbsicke (10) auf einem niedrigeren Niveau liegt als auf der dem Brennraum (1) zugewandten Seite der Halbsicke (10).

4. Zylinderkopfdichtung gemäß Anspruch 2, wobei die Ringauflage (4) auf der dem Brennraum (1) abgewandten Seite der Halbsicke (10) auf einem höheren Niveau liegt als auf der dem Brennraum (1) zugewandten Seite der Halbsicke (10).

5. Zylinderkopfdichtung gemäß Anspruch 4, wobei die Ringauflage (4) auf der dem Brennraum (1) abgewandten Seite der Halbsicke (10) einen Abstand (a) von der Funktionslage (2) hat.

6. Zylinderkopfdichtung gemäß Anspruch 4, wobei die Ringauflage (4) auf der dem Brennraum (1) abgewandten Seite der Halbsicke (10) an die Funktionslage (2) angrenzt.

7. Zylinderkopfdichtung gemäß Anspruch 1, wobei die Sicke (12) als Vollsicke ausgeführt ist.

8. Zylinderkopfdichtung gemäß Anspruch 7, wobei die Ringauflage (4) auf der vom Brennraum (1) abgewandten Seite der Vollsicke (12) auf dem gleichen Niveau liegt wie auf der dem Brennraum (1) zugewandten Seite der Vollsicke (12).

9. Zylinderkopfdichtung gemäß Anspruch 7, wobei die Ringauflage (4) auf der vom Brennraum (1) abgewandten Seite der Vollsicke (12) auf einem niedrigeren Niveau liegt als auf der dem Brennraum (1) zugewandten Seite der Vollsicke (12).

10. Zylinderkopfdichtung gemäß Anspruch 7, wobei die Ringauflage (4) auf der vom Brennraum (1) abgewandten Seite der Vollsicke (12) auf einem höheren Niveau liegt als auf der dem Brennraum (1) zugewandten Seite der Vollsicke (12).

11. Zylinderkopfdichtung gemäß Anspruch 10, wobei die Ringauflage (4) auf der vom Brennraum (1) abgewandten Seite der Vollsicke (12) einen Abstand (a) von der Funktionslage (2) hat.

12. Zylinderkopfdichtung gemäß Anspruch 10, wobei die Ringauflage (4) auf der vom Brennraum (1) abgewandten Seite der Vollsicke (12) an die Funktionslage (2) angrenzt.

13. Zylinderkopfdichtung gemäß einem der Ansprüche 7 bis 12, wobei die Spitze der Vollsicke (12) nach unten gerichtet ist.

14. Zylinderkopfdichtung gemäß einem der Ansprüche 7 bis 11, wobei die Spitze der Vollsicke (12) nach oben gerichtet ist.

15. Zylinderkopfdichtung gemäß einem der Ansprüche 1 bis 14, wobei sich die Ringauflage (4) mindestens von dem einen Sickenfuß bis zu dem anderen Sickenfuß der Vollsicke (6) erstreckt.

## Claims

1. A metallic cylinder head gasket with at least one opening corresponding to a combustion chamber (1) of an internal combustion engine, comprising a functional layer (2) and a support ring (4) lying thereunder, said functional layer comprising a full bead (6), **characterized in that** said support ring (4) comprises a full bead (8), in which said full bead (8) of said functional layer (2) rests, and **in that** said support ring (4) comprises a bead (10, 12) arranged on a side of said full bead (8) of said support ring (4) facing away from said combustion chamber (1).

2. Cylinder head gasket according to claim 1, wherein said bead (10) is implemented as a half bead.

3. Cylinder head gasket according to claim 2, wherein said support ring (4) is arranged on the side of said half bead (10) facing away from said combustion chamber (1) on a level lower than on the side of said half bead (10) facing towards said combustion chamber (1).

4. Cylinder head gasket according to claim 2, wherein said support ring (4) is arranged on the side of said half bead (10) facing away from said combustion chamber (1) on a level higher than on the side of said half bead (10) facing towards said combustion chamber (1).

5. Cylinder head gasket according to claim 4, wherein said support ring (4) on the side of said half bead (10) facing away from said combustion chamber (1) is spaced at a distance (a) from said functional layer (2).

6. Cylinder head gasket according to claim 4, wherein said support ring (4) on the side of said half bead (10) facing away from said combustion chamber (1) is adjoining said functional layer (2).

7. Cylinder head gasket according to claim 1, wherein said bead (12) is implemented as a full bead.

8. Cylinder head gasket according to claim 7, wherein said support ring (4) on the side of said full bead (12) facing away from said combustion chamber (1) is disposed on the same level as the side of said full bead (12) facing towards said combustion chamber (1).

9. Cylinder head gasket according to claim 7, wherein said support ring (4) is arranged on the side of said full bead (12) facing away from said combustion chamber (1) on a level lower than on the side of said full bead (12) facing towards said combustion chamber (1).

10. Cylinder head gasket according to claim 7, wherein said support ring (4) is arranged on the side of said full bead (12) facing away from said combustion chamber (1) on a level higher than on the side of said full bead (12) facing towards said combustion chamber (1).

11. Cylinder head gasket according to claim 10, wherein said support ring (4) on the side of said full bead (12) facing away from said combustion chamber (1) is spaced at a distance (a) from said functional layer (2).

12. Cylinder head gasket according to claim 10, wherein said support ring (4) on the side of said full bead (12) facing away from said combustion chamber (1) is adjoining said functional layer (2).

13. Cylinder head gasket according to one of claims 7 to 12, wherein a tip of said full bead (12) is directed downwards.

14. Cylinder head gasket according to one of claims 7 to 11, wherein a tip of said full bead (12) is directed upwards.

15. Cylinder head gasket according to one of claims 1 to 14, wherein said support ring (4) extends from the one bead foot of said full bead (6) up to the other bead foot of said full bead (6).

## Revendications

1. Joint de culasse métallique comprenant au moins une ouverture en fonction d'une chambre de combustion (1) d'un moteur à combustion, comprenant une position de fonction (2) et un support de bague (4) sous-jacent, la position de fonction présentant une moulure pleine (6) **caractérisée en ce que** le support de bague (4) présente une moulure pleine (8), dans laquelle repose la moulure pleine (6) de la position de fonction (2), et **en ce que** le support de bague (4) présente une moulure (10, 12), qui est disposée sur le côté, opposée à la chambre de combustion (1), de la moulure pleine (8) du support de bague (4).

2. Joint de culasse selon la revendication 1, la moulure (10) étant réalisée sous forme de demi-moulure.

3. Joint de culasse selon la revendication 2, le support de bague (4) reposant sur le côté, opposé à la chambre de combustion (1), de la demi-moulure (10) sur un niveau plus bas que sur le côté, tourné vers la chambre de combustion (1), de la demi-moulure (10).

4. Joint de culasse selon la revendication 2, le support de bague (4) étant disposé sur le côté, opposé à la chambre de combustion (1) de la demi-moulure (10) sur un niveau plus élevé que sur le côté, tourné vers la chambre de combustion (1), de la demi-moulure (10).

5. Joint de culasse selon la revendication 4, le support de bague (4) présentant une distance (a) de la position de fonction (2) sur le côté, opposé à la chambre de combustion (1) de la demi-moulure (10).

6. Joint de culasse selon la revendication 4, le support de bague (4) étant contigu à la position de fonction (2) sur le côté, opposé à la chambre de combustion (1), de la demi-moulure (10).

7. Joint de culasse selon la revendication 1, la moulure (12) étant réalisée sous la forme de moulure pleine.

8. Joint de culasse selon la revendication 7, le support de bague (4) étant situé sur le côté, opposé à la chambre de combustion (1), de la moulure pleine (12) sur le même niveau que sur le côté, tourné vers la chambre de combustion (1), de la moulure pleine (12).

9. Joint de culasse selon la revendication 7, le support de bague (4) étant situé sur le côté, opposé à la chambre de combustion (1), de la moulure pleine (12) sur un niveau plus bas que sur le côté, tourné vers la chambre de combustion (1), de la moulure pleine (12).

10. Joint de culasse selon la revendication 7, le support de bague (4) étant disposé sur le côté, opposé à la chambre de combustion (1), de la moulure pleine (12) sur un niveau plus élevé que sur le côté, tourné vers la chambre de combustion (1), de la moulure pleine (12).

11. Joint de culasse selon la revendication 10, le support de bague (4) étant à une distance (a) de la position de fonction (2) sur le côté, opposé à la chambre de combustion (1), de la moulure pleine (12).

12. Joint de culasse selon la revendication 10, le support de bague (4) étant contigu à la position de fonction (2) sur le côté, opposé à la chambre de combustion (1), de la moulure pleine (12).

13. Joint de culasse selon l'une des revendications 7 à 12, la pointe de la moulure pleine (12) étant dirigée vers le bas.

14. Joint de culasse selon l'une des revendications 7 à 11, la pointe de la moulure pleine (12) étant dirigée vers le haut.

15. Joint de culasse selon l'une des revendications 1 à 14, le support de bague (4) s'étendant au moins depuis l'une des bases de moulure jusqu'à l'autre base de moulure de la moulure pleine (6).
